# EUROPÄISCHE PATENTANMELDUNG

(11) **EP 0 754 532 A1**
(43) Veröffentlichungstag der Anmeldung: **22.01.1997**
(21) Anmeldenummer: 96110792.7
(22) Anmeldetag: 04.07.1996
(51) Int. Cl.: B29C 45/14, F24C 15/10

(54) **Verfahren zur Herstellung eines Herd-Kochfeldes und hiernach hergestelltes Herd-Kochfeld**

(30) Priorität: 15.07.1995 DE 19525825
(71) Anmelder: mecalit GmbH Kunststoffverarbeitung, D-77837 Lichtenau (DE)
(72) Erfinder: Meier, Karl-Heinz, D-77839 Lichtenau (DE); Meier, Max, D-77839 Lichtenau (DE)
(74) Vertreter: Dipl.-Ing. Heiner Lichti, Dr. rer. nat. Dipl.-Phys. Jost Lempert, Dipl.-Ing. Hartmut Lasch

(57) **Zusammenfassung**

Ein Herd-Kochfeld, das aus einer Platte (1) aus Glaskeramik und einer hitzebeständigen Randeinfassung (2) aus einem zumindest deren Oberseite bildenden Metallprofil (3) und einer Kunststoff-Fütterung (4) besteht, wird dadurch hergestellt, daß das Metallprofil (3) in das eine Werkzeug einer wenigstens zweiteiligen Spritzgießform eingelegt und die Glasplatte (1) in diesem oder dem anderen Werkzeug in einer seine Relativlage zum Metallprofil (3) gewährleistenden Lage positioniert wird, und daß nach Schließen der Spritzgießform der Rand der Platte (1) allseitig mit Kunststoff unter Bildung eines Verbundes mit dem Metallprofil (3) umspritzt wird.

## Beschreibung

Die Erfindung betrifft ein Verfahren zur Herstellung eines Herd-Kochfeldes, bestehend aus einer Platte aus Glaskeramik und einer hitzebeständigen Randeinfassung aus einem zumindest deren Oberseite bildenden Metallprofil und einer Kunststoff-Fütterung.

Bei einem Glaskeramik-Kochfeld erfüllt die Randeinfassung mehrere Aufgaben. Zum einen bildet sie an der Oberseite eine Abgrenzung der Kochfläche, zum anderen dient sie zur Abstützung der Glaskeramik-Platte an dem Herdgehäuse bzw. der Koch- oder Backmulde und schließlich bildet sie bei Einbaugeräten den Anschluß an benachbarte Geräte oder Küchenmöbel. Das Metallprofil, das zumindest die Oberseite der Randeinfassung bildet, bietet die notwendige Hitzebeständigkeit auch gegenüber auslaufendem Kochgut und verhindert ferner dessen unkontrolliertes Ablaufen. Die Kunststoff-Fütterung dient in erster Linie zur elastischen Aufnahme der Glaskeramik-Platte und verhindert die Einwirkung von mechanischen Spannungen auf die Platte. Ferner dient sie zur thermischen Isolierung gegenüber benachbarten Geräten oder Möbeln.

Bisher wird die Kunststoff-Fütterung durch Ausspritzen mit einer Silikonmasse hergestellt. Das Ausspritzen erfolgt in der Regel von Hand und ist daher personalaufwendig und zudem wegen der relativ langen Abbindezeit sehr zeitraubend.

Der Erfindung liegt die Aufgabe zugrunde ein Verfahren vorzuschlagen, mit dessen Hilfe die Anbringung der Randeinfassung an der Glaskeramik-Platte in einer automatisierten Fertigungstechnik bei minimaler Taktzeit erfolgen kann.

Diese Aufgabe wird erfindungsgemäß dadurch gelöst, daß das Metallprofil in das eine Werkzeug einer wenigstens zweiteiligen Spritzgießform eingelegt und die Glasplatte in diesen oder dem anderen Werkzeug in einer seine Relativlage zum Metallprofil gewährleistenden Lage positioniert wird, und daß nach Schließen der Spritzgießform der Rand der Platte allseitig mit Kunststoff unter Bildung eines Verbundes mit dem Metallprofil umspritzt wird.

Bei dem erfindungsgemäßen Verfahren wird das Metallprofil mit der Glaskeramik-Platte im Wege des Spritzgießens verbunden, wobei die eingespritzte Kunststoffmasse zugleich die Fütterung bildet und die Platte randseitig vollständig umgibt. Die Umspritzung sorgt also nicht nur für die gewünschten Dämpfungseigenschaften, sondern bildet zugleich das Verbindungsmittel von Metallprofil und Glaskeramik-Platte.

Durch das Spritzgießen der Fütterung können die manuellen Tätigkeiten auf ein Minimum reduziert werden. Ferner ermöglicht das Spritzgießen kurze Taktzeiten, also eine hohe Fertigungskapazität, und liefert ein stets gleichbleibendes Produkt mit hoher Maßhaltigkeit. Ferner erlaubt das Verfahren den Einsatz anderer Kunststoffe als kalthärtender Silikonmassen, die infolgedessen optimal auf den Bestimmungszweck eingestellt werden können.

Bei einer bevorzugten Ausführungsform ist vorgesehen, daß die die Kunststoffumspritzung ausbildende Kavität an zumindest einem Werkzeug mittels des Metallprofils gegenüber der Oberseite oder der Unterseite der Platte abgedichtet wird.

Das Metallprofil übergreift also mit einem Profilabschnitt den Rand der Glaskeramik-Platte und liegt der Plattenfläche, vorzugsweise an der Oberseite dichtend an.

Vorzugsweise wird eine Spritzgießform mit horizontaler Trennebene verwendet, wobei das Metallprofil in das obere Werkzeug und die Platte in das untere Werkzeug eingelegt wird. Dabei kann das Metallprofil beispielsweise mittels Unterdruck in dem oberen Werkzeug gehalten werden.

Die Erfindung betrifft ferner ein Herd-Kochfeld, das aus einer Platte aus Glaskeramik und einer hitzebeständigen Randeinfassung aus einem zumindest deren Oberseite bildenden Metallprofil und einer Kunststoff-Fütterung besteht. Ein solches Kochfeld zeichnet sich erfindungsgemäß dadurch aus, daß die Platte an ihrem Rand allseitig mit Kunststoff umspritzt ist und das Metallprofil wenigstens einen Profilabschnitt aufweist, der von dem Kunststoff formschlüssig eingebettet ist.

Auf diese Weise ist ein Formschluß sowohl zwischen der Kunststoffumspritzung und der Glaskeramik-Platte, als auch zwischen dem Metallprofil und der Kunststoffumspritzung gegeben. Der Formschluß zwischen Glaskeramik-Platte und Umspritzung ergibt sich einerseits durch den allseitigen Übergriff des Plattenrandes durch die Umspritzung und deren geschlossener Ringform, während der Formschluß zwischen Metallprofil und Umspritzung durch entsprechende profilabschnitte an ersterem verwirklicht ist.

In einer weiteren Ausführung weist das Metallprofil wenigstens einen profilabschnitt auf, mit dem es der Oberseite der Platte aufliegt, so daß das Metallprofil die gesamte oberseitige Begrenzung der Randeinfassung bildet.

Der Formschluß zwischen der Umspritzung und dem Metallprofil kann auf unterschiedliche Weise hergestellt werden, indem das Metallprofil beispielsweise Rippen aufweist, die in den Kunststoff eingebettet sind, oder aber mit Durchbrechungen versehen ist, die von dem Kunststoff durchsetzt sind. Schließlich kann das Metallprofil einen umlaufenden Umbug aufweisen, mit dem es in dem Kunststoff verankert ist.

Schließlich gibt das erfindungsgemäße Verfahren die Möglichkeit, an der Kunststoff-Umspritzung im wesentlichen nach unten ragende Vorsprünge vorzusehen, die zur Befestigung der Platte an einem Unterbau oder zur Befestigung von Funktionsteilen des Herdes dienen können.

Nachstehend ist die Erfindung anhand mehrerer in der Zeichnung wiedergegebener Ausführungsbeispiele beschrieben. In der Zeichnung zeigen:
- Figur 1: einen Schnitt im Randbereich eines Herd-Kochfeldes mit einer schematischen, gestrichelten Teildarstellung der Spritzgießform;
- Figuren 2 bis 4: einen der Figur 1 entsprechenden Schnitt dreier weiterer Ausführungsbeispiele.

Das Herd-Kochfeld gemäß Zeichnung besteht aus der das eine Kochfeld bildenden Platte 1 aus Glaskeramik und einer Randeinfassung 2, die wiederum aus einem Metallprofil 3 und einer Kunststoff-Fütterung 4 gebildet ist. Das Metallprofil 3 weist ein flaches, liegendes U-Profil auf, dessen horizontal liegender Steg 5 die Oberseite der Randeinfassung bildet und dessen etwas längerer Schenkel 6 der Glaskeramik-Platte 1 auf der Oberseite anliegt, während der kürzere Schenkel 7 den anderen Randabschluß bildet und beispielsweise auf einem benachbarten Gerät oder Möbel aufliegt.

Die Glaskeramik-platte 1 ist an ihrem umlaufenden Rand 8 allseitig von der Fütterung 4 umfaßt, die auf den Rand aufgespritzt ist.

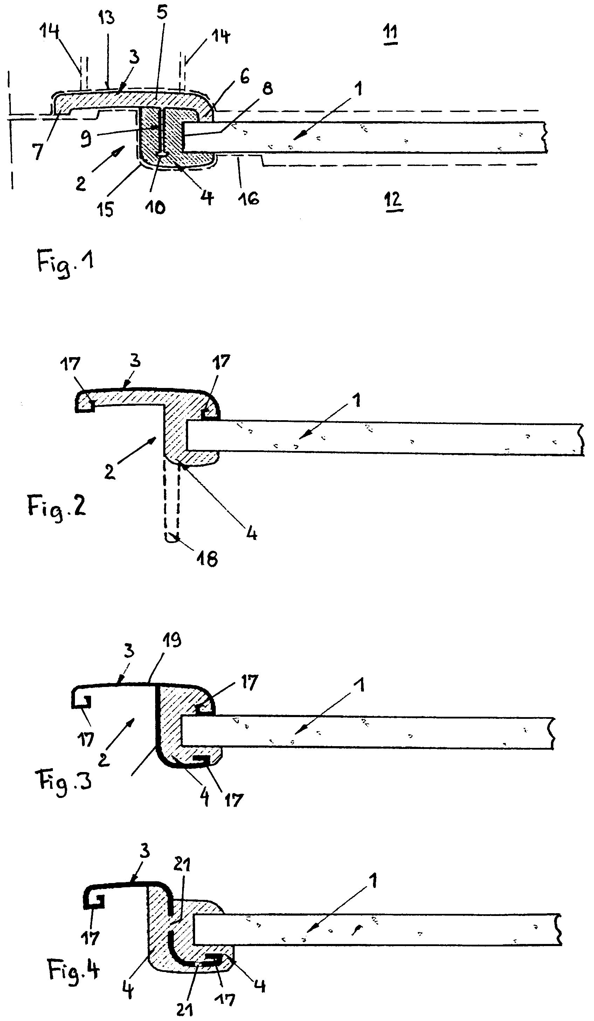

Das Metallprofil 3 weist bei dem Ausführungsbeispiel gemäß Figur 1 an der Unterseite des Stegs 5 einen Profilabschnitt 9 auf, der in Form von stiftförmigen Vorsprüngen, Rippen od. dgl. ausgebildet ist und am freien Ende eine Verdickung 10 besitzt. Mit diesem Profilabschnitt 9 ist das Metallprofil 5 in die Kunststoff-Fütterung 4 formschlüssig eingebettet.

Das Kochfeld gemäß Figur 1 wird im Wege des Spritzgießens hergestellt bzw. montiert. Die hierfür eingesetzte Spritzgießform besteht aus einem Oberwerkzeug 11 und einem Unterwerkzeug 12. Das Oberwerkzeug 11 weist eine Vertiefung 13 auf, in die das Metallprofil 3 eingelegt ist. Das Metallprofil wird beispielsweise mittels Unterdruck über Leitungen 14 im Oberwerkzeug 11 gehalten.

Das Unterwerkzeug 12 weist die Formkavität 15 für die Ausbildung der Fütterung 4 auf. Diese Formkavität wird an der Oberseite und am rechten oberen Rand durch den Steg 5 und den Schenkel 6 des Metallprofils 3 sowie an der rechten Seite durch die einem Auflager 16 am Unterwerkzeug 12 aufliegende Glaskeramik-Platte begrenzt.

Bei geöffneter Spritzgießform wird das Metallprofil 3 in das Oberwerkzeug 11 eingelegt und mittels Vakuum festgehalten, während die Glaskeramik-Platte 1 auf die Auflager 16 im Unterwerkzeug aufgelegt wird. Nach dem Zusammenfahren von Oberwerkzeug 11 und Unterwerkzeug 12 wird die Kavität 15 ausgespritzt. Nach dem Endformen ist ein formschlüssiger Verbund zwischen Metallprofil 5, Glaskeramik-Platte 1 und Fütterung 4 verwirklicht.

Das Ausführungsbeispiel gemäß Figur 2 unterscheidet sich von dem gemäß Figur 1 zunächst durch die Form des Metallprofils 3. Es ist als liegendes C-Profil ausgebildet, das an seinen freien Schenkeln je einen Umbug 17 aufweist, mittels dessen es formschlüssig von der eingespritzten Fütterung 4 umgriffen wird. Ferner kann anläßlich des Spritzgießvorgangs an der Fütterung 4 ein Profilabschnitt 18 einstückig angeformt werden, der aus einzelnen Vorsprüngen, einer umlaufenden Rippe od. dgl. besteht und zur Befestigung des Kochfeldes auf einem Unterbau oder an benachbarten Geräten oder Möbeln oder aber zur Befestigung von Funktionsteilen für das Kochfeld dienen kann.

Das Ausführungsbeispiel gemäß Figur 3 zeigt ein Metallprofil 3, das aus einem C-Profil 19 und einem an dessen Rücken nach unten ansetzenden Winkelprofil 20 besteht. Sowohl das C-Profil 19, wie auch der freie Schenkel des Winkelprofils 20 weisen wiederum jeweils einen Umbug 17 auf.

Bei dem Ausführungsbeispiel gemäß Figur 4 ist das Metallprofil 3 ein Z-Profil, das an beiden Längskanten wiederum mit je einem Umbug versehen ist, während die innerhalb der aufgespritzten Fütterung 4 liegenden Bereiche des Z-Profils Durchbrechungen 21 aufweisen können, die von dem Kunststoff durchsetzt sind.

## Patentansprüche

1. Verfahren zur Herstellung eines Herd-Kochfeldes, bestehend aus einer Platte aus Glaskeramik und einer hitzebeständigen Randeinfassung aus einem zumindest deren Oberseite bildenden Metallprofil und einer Kunststoff-Fütterung, dadurch gekennzeichnet, daß das Metallprofil in das eine Werkzeug einer wenigstens zweiteiligen Spritzgießform eingelegt und die Glasplatte in diesem oder dem anderen Werkzeug in einer seine Relativlage zum Metallprofil gewährleistenden Lage positioniert wird, und daß nach Schließen der Spritzgießform der Rand der Platte allseitig mit Kunststoff unter Bildung eines Verbundes mit dem Metallprofil umspritzt wird.

2. Verfahren nach Anspruch 1, dadurch gekennzeichnet, daß die die Kunststoffumspritzung ausbildende Kavität an zumindest einem Werkzeug mittels des Metallprofils gegenüber der Oberseite oder der Unterseite der Platte abgedichtet wird.

3. Verfahren nach Anspruch 1 oder 2, dadurch gekennzeichnet, daß eine Spritzgießform mit horizontaler Trennebene verwendet wird, und daß das Metallprofil in das obere Werkzeug, die Platte in das untere Werkzeug eingelegt wird.

4. Verfahren nach Anspruch 3, dadurch gekennzeichnet, daß das Metallprofil mittels Unterdruck in dem oberen Werkzeug gehalten wird.

5. Herd-Kochfeld, bestehend aus einer Platte aus Glaskeramik und einer hitzebeständigen Randeinfassung aus einem zumindest deren Oberseite bildenden Metallprofil und einer Kunststoff-Fütterung, dadurch gekennzeichnet, daß die Platte an ihrem Rand allseitig mit Kunststoff umspritzt ist und das Metallprofil wenigstens einen Profilabschnitt aufweist, der in dem Kunststoff formschlüssig eingebettet ist.

6. Herd-Kochfeld nach Anspruch 5, dadurch gekennzeichnet, daß das Metallprofil wenigstens einen Profilabschnitt aufweist, mit dem es der Oberseite der Platte aufliegt.

7. Herd-Kochfeld nach Anspruch 5 oder 6, dadurch gekennzeichnet, daß das Metallprofil Rippen aufweist, mit denen es formschlüssig in den Kunststoff eingebettet ist.

8. Herd-Kochfeld nach Anspruch 5 oder 6, dadurch gekennzeichnet, daß das Metallprofil mit Durchbrechungen versehen ist, die von dem Kunststoff durchsetzt sind.

9. Herd-Kochfeld nach Anspruch 5 oder 6, dadurch gekennzeichnet, daß das Metallprofil einen umlaufenden Umbug aufweist, mit dem es in dem Kunststoff verankert ist.

10. Herd-Kochfeld nach einem der Ansprüche 1 bis 9, dadurch gekennzeichnet, daß die Kunststoff-Umspritzung im wesentlichen nach unten ragende Vorsprünge od. dgl. aufweist, die zur Befestigung der Platte an einem Unterbau dienen.
